# EUROPÄISCHE PATENTSCHRIFT

(11) **EP 3 419 792 B1**
(45) Veröffentlichungstag und Bekanntmachung des Hinweises auf die Patenterteilung: **25.03.2020**
(21) Anmeldenummer: 17705375.8
(22) Anmeldetag: 14.02.2017
(51) Int. Cl.: B25J 9/10, B25J 13/08, B25J 19/06

(54) **ROBOTERGELENK UND ROBOTER MIT WENIGSTENS EINEM SOLCHEN ROBOTERGELENK**
ROBOT JOINT AND ROBOT HAVING AT LEAST ONE SUCH ROBOT JOINT
ARTICULATION DE ROBOT ET ROBOT COMPRENANT AU MOINS UNE ARTICULATION DE ROBOT DE CE TYPE

(30) Priorität: 23.02.2016 DE 102016202792
(43) Veröffentlichungstag der Anmeldung: 02.01.2019
(73) Patentinhaber: KUKA Deutschland GmbH, 86165 Augsburg (DE)
(72) Erfinder: RIEDEL, Martin, 86165 Augsburg (DE); RIESKAMP, Nenja, 48308 Senden (DE)
(74) Vertreter: Tillmann, Axel
(86) Internationale Anmeldenummer: PCT/EP2017/053294
(87) Internationale Veröffentlichungsnummer: WO 2017/144310

(56) Entgegenhaltungen:
- EP-A2- 2 666 600
- DE-A1-102008 026 295
- DE-A1-102011 054 910

## Beschreibung

Die Erfindung betrifft ein Robotergelenk, aufweisend ein Roboterglied, ein an dem Roboterglied drehbar gelagertes Antriebsrad und ein an dem Roboterglied drehbar gelagertes Abtriebsrad, eine das Antriebsrad mit dem Abtriebsrad zum Übertragen eines Antriebsmoments koppelnde Getriebevorrichtung, sowie einen das Antriebsrad antreibenden Motor, dessen Motorwelle zum Einleiten des Antriebsmoments über eine Antriebsverbindung mit dem Antriebsrad verbunden ist. Die Erfindung betrifft außerdem einen zugehörigen Roboter mit wenigstens einem solchen Robotergelenk.

Die EP 2 666 600 A2 beschreibt einen Industrieroboter mit einem derartigen Robotergelenk, aufweisend einen Roboterarm, der eine Schwinge und einen an der Schwinge schwenkbar gelagerten Armausleger aufweist, der ein schwenkbar an der Schwinge gelagertes Armgehäuse aufweist, und der ein mittels eines Antriebs, der eine Antriebswelle aufweist, um eine sich in Längserstreckung des Armauslegers erstreckende Armachse drehbar an dem Armgehäuse gelagertes Handgrundgehäuse aufweist.

Aufgabe der Erfindung ist es, ein Robotergelenk bzw. einen Roboter zu schaffen, der konstruktiv einfach aufgebaut ist und zur Mensch-Roboter-Kollaboration geeignet ist.

Diese Aufgabe wird erfindungsgemäß gelöst durch ein Robotergelenk, aufweisend
- ein Roboterglied,
- ein an dem Roboterglied drehbar gelagertes Antriebsrad und ein an dem Roboterglied drehbar gelagertes Abtriebsrad,
- eine das Antriebsrad mit dem Abtriebsrad zum Übertragen eines Antriebsmoments koppelnde Getriebevorrichtung,
- sowie einen das Antriebsrad antreibenden Motor, dessen Motorwelle zum Einleiten des Antriebsmoments über eine Antriebsverbindung mit dem Antriebsrad verbunden ist, des Weiteren aufweisend eine Sicherheitskupplung, die ausgebildet ist, bei einem Überschreiten eines vorgegebenen Grenzmomentes die Antriebsverbindung zwischen der Motorwelle und dem Antriebsrad zu trennen und bei einem Unterschreiten des vorgegebenen Grenzmomentes die Antriebsverbindung zwischen der Motorwelle und dem Antriebsrad wiederherzustellen,
   und eine Sensorvorrichtung, die ausgebildet ist, die Drehwinkelstellung des Abtriebsrads zu erfassen.

Das Roboterglied ist ausgebildet, Kräfte und Momente, welche insbesondere von einem Greifer oder Werkzeug, das durch den das Roboterglied aufweisenden Roboterarm gehandhabt wird, insbesondere bewegt wird, über einen Werkzeugbefestigungsflansch des Roboterarms in den Roboterarm, d.h. in seine Struktur und damit in das Roboterglied eingeleitet wird, von einem Gelenk an ein folgendes Gelenk weiterzuleiten. Daneben müssen auch Kräfte und Momente, welche von der Eigengewichtskraft des Roboterarms stammen, in das Grundgestell des Roboterarms weitergeleitet werden. Jedes erfindungsgemäße Roboterglied des Roboterarms bildet insoweit dazu ein Strukturteil des Roboterarms, das ausgebildet ist, diese Kräfte und Momente aufnehmen und weiterleiten zu können. Im Allgemeinen ist ein solches Strukturteil hohl ausgebildet, kann insoweit ein Gehäuse bilden, und kann beispielsweise von einem Metallgussteil, einer geschweißten Stahlkonstruktion, einem Hartschaumbauteil oder einem Kunststoffbauteil, insbesondere durch Spritzgießen, 3D-Druck, Umschäumen und/oder Kleben hergestellt oder gebildet werden. Jedes Roboterglied ist über eines der Gelenke mit einem unmittelbar folgenden Glied des Roboterarms verbunden, insbesondere drehbar verbunden.

Das Antriebsrad und das Abtriebsrad können, in einem festen Achsabstand voneinander angeordnet, innerhalb des Roboterglieds mittels jeweils einer Lageranordnung drehbar gelagert sein. Mittels der Getriebevorrichtung ist das Antriebsrad schlupffrei und spielfrei an das Abtriebsrad gekoppelt. Die Getriebevorrichtung kann jedoch zwischen dem Antriebsrad und dem Abtriebsrad eine Elastizität aufweisen. Der Motor kann insbesondere ein elektrischer Motor sein. Der Motor kann insbesondere auch ohne Antriebsgetriebe ausgebildet sein.

Die Sicherheitskupplung kann Teil der Antriebsverbindung sein. Das Grenzmoment kann bauartbedingt durch die konstruktive Ausführung der Sicherheitskupplung vorgegeben sein. Alternativ kann die Sicherheitskupplung ausgebildet sein, in ihrem Grenzmoment manuell oder automatisch einstellbar zu sein. So kann die Sicherheitskupplung beispielsweise eine manuell oder automatisiert zu betätigende Verstelleinrichtung aufweisen, die ausgebildet ist, das Grenzmoment der Sicherheitskupplung zu verändern. Das Robotergelenk, welches die Sicherheitskupplung aufweist, kann somit bei Überschreiten des Grenzmoments bspw. aufgrund eines manuellen Einwirkens durch einen Benutzer des Roboters manuell verstellt, insbesondere rückgetrieben oder zurückgedrückt werden. Dies kann sowohl im Stillstand, als auch in der Bewegung des Roboterarms erfolgen. Die Sicherheitskupplung kann als eine vom Motor separate Baueinheit innerhalb des Robotergelenks angeordnet sein. Alternativ kann die Sicherheitskupplung auch in den Motor integriert sein, d.h. die Sicherheitskupplung kann eine innerhalb des Motorgehäuses angeordnete Baueinheit sein. Indem die Sensorvorrichtung ausgebildet ist, die Drehwinkelstellung des Abtriebsrads zu erfassen, kann trotz eines durch eine Trennung der Sicherheitskupplung auftretenden Schlupfs in der Antriebsverbindung die Drehwinkelstellung des Abtriebsrads bestimmt werden. Um das Robotergelenk durch eine Robotersteuerung weiterhin genau in seiner Robotergelenksstellung automatisch positionieren zu können, kann die von der Sensorvorrichtung erfasste momentane Drehwinkelstellung des Abtriebsrads eine Eingangsgröße für die Regelung bilden, welche durch Ansteuern des Motors mit einem Sollwert die gewünschte Zielposition d.h. die gewünschte Drehwinkelstellung des Abtriebsrads einstellt. Die Sensorvorrichtung ist deshalb mindestens abtriebsseitig vorhanden, so dass die aktuelle Stellung des abtriebsseitigen Glieds, d.h. des Abtriebsrads, trotz eines Durchrutschens der Sicherheitskupplung jederzeit eindeutig festgestellt werden kann. Ein solcher Schlupf kann mittels der Sensorvorrichtung nicht nur qualitativ, sondern auch quantitativ erfasst werden, d.h. es kann der Gesamtwinkel und damit insbesondere auch die Anzahl der Umdrehungen bestimmt werden, um welchen Gesamtwinkel bzw. um welche Anzahl an Umdrehungen die Motorwelle bezüglich des Antriebsrads durchgerutscht ist.

Die Sicherheitskupplung kann einen kraftschlüssigen Zugmitteltrieb aufweisen, mit einer an die Motorwelle drehmomentübertragend angeschlossenen Antriebsscheibe, einer an das Antriebsrad drehmomentübertragend angeschlossenen Abtriebsscheibe und einem die Antriebsscheibe und die Abtriebsscheibe kraftschlüssig umschlingenden Zugmittel. Das Zugmittel ist dabei kraftschlüssig ausgeführt. Bei Überschreiten des Grenzmoments rutscht das Zugmittel an der Antriebsscheibe und/oder an der Abtriebsscheibe durch. Wird das Grenzmoment wieder unterschritten, dann greift das Zugmittel wieder sowohl an der Antriebsscheibe als auch an der Abtriebsscheibe, so dass der Zugmitteltrieb wieder wirkt und die Sicherheitskupplung insoweit wieder geschlossen ist. Statt eines Zugmitteltriebs kann alternativ ggf. auch ein andersartiges durchrutschendes Getriebe verwendet werden, so z.B. ein Reibradgetriebe. In einer Ausführungsform als ein Reibradgetriebe kann die Antriebsscheibe beispielsweise eine stirnseitige erste Reibmantelfläche aufweisen, welche eine zweite Reibmantelfläche an der Stirnseite der Abtriebsscheibe schlupfbehaftet kontaktiert.

Der Zugmitteltrieb kann als ein Riementrieb ausgebildet sein, der einen die Antriebsscheibe und die Abtriebsscheibe kraftschlüssig umschlingenden Riemen aufweist, und eine einstellbare, das Durchrutschmoment des Riementriebs bestimmende Riemenspannvorrichtung aufweist, die ausgebildet ist, durch Einstellen des Durchrutschmoments das Grenzmoment der Sicherheitskupplung vorzugeben. Der Riemen ist dabei kraftschlüssig ausgeführt. Bei Überschreiten des Grenzmoments rutscht der Riemen an der Antriebsscheibe und/oder an der Abtriebsscheibe durch. Wird das Grenzmoment wieder unterschritten, dann greift der Riemen wieder sowohl an der Antriebsscheibe als auch an der Abtriebsscheibe, so dass der Riementrieb wieder wirkt und die Sicherheitskupplung insoweit wieder geschlossen ist

Das Durchrutschmoment des Riementriebs bestimmt das Grenzmoment der Sicherheitskupplung. Das Durchrutschmoment und damit das Grenzmoment wird beeinflusst durch die radiale Anpresskraft des Riemens an der Antriebsscheibe und der Abtriebsscheibe. Die radiale Anpresskraft kann durch die Riemenspannvorrichtung verändert werden, wodurch sich in Folge auch das Durchrutschmoment und somit das Grenzmoment verändert. Mittels der Riemenspannvorrichtung lässt sich somit das Grenzmoment vorgeben und ggf. auch verändern.

Die Getriebevorrichtung kann als ein formschlüssiger Zugmitteltrieb ausgebildet sein, der eine an das Antriebsrad drehmomentübertragend angeschlossene Eingangssynchronscheibe, eine an das Abtriebsrad drehmomentübertragend angeschlossene Ausgangssynchronscheibe und einen die Eingangssynchronscheibe und die Ausgangssynchronscheibe formschlüssig umschlingenden Zahnriemen aufweist. Mittels des formschlüssigen Zugmitteltriebs bzw. mittels des Zahnriemens ist das Antriebsrad schlupffrei und spielfrei an das Abtriebsrad gekoppelt. Der formschlüssige Zugmitteltrieb kann jedoch, insbesondere aufgrund des Zahnriemens, zwischen dem Antriebsrad und dem Abtriebsrad eine Elastizität aufweisen.

Die Getriebevorrichtung kann eine Zahnriemenabtastvorrichtung umfassen, die zum Abtasten des Zahnriemens ausgebildet ist, wobei die Zahnriemenabtastvorrichtung einen ersten Aufnehmer zur Erfassung der Zahnriemenspannung am Lasttrum des Zahnriemens und einen zweiten Aufnehmer zur Erfassung der Zahnriemenspannung am Leertrum des Zahnriemens aufweist.

Der erste Aufnehmer und der zweite Aufnehmer können als Dehnungssensoren ausgebildet. Die Dehnungssensoren können beispielsweise Dehnmessstreifen (DMS) aufweisen, welche eine Dehnung durch eine Änderung eines elektrischen Widerstands aufgrund einer Verformung des Bauteils, auf dem der Dehnmessstreifen (DMS) aufgebracht ist, elektrisch messen können. Das Bauteil, auf dem der Dehnmessstreifen (DMS) aufgebracht sein kann, kann eine Biegefeder sein, welche Teil der Zahnriemenabtastvorrichtung sein kann.

Die Zahnriemenabtastvorrichtung kann folglich eine am Lasttrum des Zahnriemens anliegende erste Tastrolle aufweisen, die mittels einer ersten Biegefeder federvorgespannt gelagert ist, eine am Leertrum des Zahnriemens anliegende zweite Tastrolle aufweisen, die mittels einer zweiten Biegefeder federvorgespannt gelagert ist, wobei die erste Biegefeder mit einem ersten Dehnungssensor versehen ist und die zweite Biegefeder mit einem zweiten Dehnungssensor versehen ist. Die Dehnungssensoren können beispielsweise Dehnmessstreifen (DMS) aufweisen, welche eine Dehnung durch eine Änderung eines elektrischen Widerstands aufgrund einer Verformung des Bauteils, auf dem der Dehnmessstreifen (DMS) aufgebracht ist, elektrisch messen können.

Ein elastischer Drehversatz in der spielfreien und schlupffreien Getriebevorrichtung kennzeichnet sich durch eine veränderte Spannung in dem Lasttrum und in dem Leertrum des Zahnriemens. Die Spannungen in dem Lasttrum und in dem Leertrum werden von der ersten Tastrolle und der zweiten Tastrolle abgetastet. In Abhängigkeit dieser abgetasteten Spannungen stellen sich in der ersten Biegefeder und in der zweiten Biegefeder entsprechende Biegungen, d.h. Verformungen ein. Diese Biegungen bzw. Verformungen der ersten und zweiten Blattfeder werden anschließend von den Dehnungssensoren, insbesondere von den Dehnmessstreifen (DMS) quantitativ erfasst. Somit lässt sich aus den von den Dehnungssensoren, insbesondere von den Dehnmessstreifen (DMS) gelieferten Messwerten ein genauer Rückschluss auf den Drehversatz in der Getriebevorrichtung schließen.

Die Getriebevorrichtung kann alternativ oder ergänzend zu den beschriebenen Dehnungssensoren einen ersten Winkellagegeber aufweisen, der eingerichtet ist, die Drehstellung des Abtriebsrads bzw. der Ausgangssynchronscheibe zu erfassen und einen zweiten Winkellagegeber aufweisen, der eingerichtet ist, die Drehstellung des Antriebsrads bzw. der Eingangssynchronscheibe zu erfassen.

Mittels des ersten Winkellagegebers und des zweiten Winkellagegebers kann der elastische Drehversatz in der spielfreien und schlupffreien Getriebevorrichtung unmittelbar bestimmt werden. Jeder Winkellagegeber kann ein Drehwinkelgeber sein. Derartige Drehwinkelgeber können Auswerteeinrichtungen umfassen, welche insbesondere die Winkellage kennzeichnende digitale Ausgangssignale liefern können, die dann beispielsweise von einer Robotersteuerung ausgewertet werden können. Die Drehwinkelgeber können beispielsweise Inkrementalgeber sein, welche Winkellageänderungen und Drehrichtungsänderungen insbesondere mit digitalen Messmethoden bestimmen können.

Die Sensorvorrichtung kann ausgebildet sein, die Drehstellung des Abtriebsrads bzw. der Ausgangssynchronscheibe zu erfassen. Dazu kann dem Abtriebsrad bzw. der Ausgangssynchronscheibe ein eigener Winkellagegeber zugeordnet sein, der ausgebildet ist, die Drehlage des Abtriebsrads bzw. der Ausgangssynchronscheibe zu erfassen. Auch dieser Winkellagegeber kann ein Drehwinkelgeber sein. Ein solcher Drehwinkelgeber kann eine Auswerteeinrichtung umfassen, welche insbesondere die Winkellage kennzeichnende digitale Ausgangssignale liefern kann, die dann beispielsweise von einer Robotersteuerung ausgewertet werden können. Dieser Drehwinkelgeber kann beispielsweise ein Inkrementalgeber sein, welcher Winkellageänderungen und Drehrichtungsänderungen des Abtriebsrads bzw. der Ausgangssynchronscheibe insbesondere mit digitalen Messmethoden bestimmen kann.

Der Motor kann einen Motorwellen-Winkellagegeber aufweisen, der ausgebildet ist, die Drehstellung der Motorwelle zu erfassen, die Sensorvorrichtung kann dabei einen Abtriebsrad-Winkellagegeber aufweisen, der ausgebildet ist, die Drehstellung des Abtriebsrads zu erfassen, wobei sowohl der Motorwellen-Winkellagegeber, als auch der Abtriebsrad-Winkellagegeber eingerichtet ist, auf Grundlage eines Vergleichs der momentanen Drehstellungen von Motorwelle und Abtriebsrad, die auftretende Lageverstellung der Motorwelle bezüglich des Antriebsrads in ihrer Größe zu erfassen.

Zur Bildung der Sensorvorrichtung kann beispielsweise der Motor den Motorwellen-Winkellagegeber aufweisen, der ausgebildet ist, die Drehstellung der Motorwelle zu erfassen, und die Sensorvorrichtung kann außerdem den Abtriebsrad-Winkellagegeber aufweisen, der ausgebildet ist, die Drehstellung des Abtriebsrads zu erfassen, wobei sowohl der Motorwellen-Winkellagegeber, als auch der Abtriebsrad-Winkellagegeber eingerichtet ist, auf Grundlage eines Vergleichs der momentanen Drehstellungen von Motorwelle und Abtriebsrad, die auftretende Lageverstellung der Motorwelle bezüglich des Antriebsrads in ihrer Größe zu erfassen.

Die Aufgabe wird außerdem gelöst durch einen Roboter, aufweisend eine Robotersteuerung und einen Roboterarm mit mehreren durch Glieder verbundenen Gelenken, die von Motoren des Roboters, welche an die Gelenke angekoppelt sind, gemäß eines von der Robotersteuerung ausgeführten Roboterprogramms automatisiert oder in einem Handfahrbetrieb des Roboters antriebsgesteuert verstellbar sind, um die Konfiguration des Roboterarms zu verändern, wobei zumindest zwei in der kinematischen Kette des Roboterarms aufeinander folgende Glieder des Roboterarms ein erstes Robotergelenk gemäß einer oder mehrerer der beschriebenen Ausführungsformen und ein zweites Robotergelenk gemäß einer oder mehrerer der beschriebenen Ausführungsformen aufweisen, wobei an jedem Roboterglied der Motor mit seinem Motorgehäuse zumindest teilweise von dem Roboterglied vorspringend angeflanscht ist und das jeweilige Abtriebsrad einen Hohlraum aufweist, so dass der vorspringende Teil des Motorgehäuses des einen Robotergelenks in dem Hohlraum des anderen Robotergelenks aufgenommen ist.

Roboter, insbesondere Industrieroboter sind Arbeitsmaschinen, die zur automatischen Handhabung und/oder Bearbeitung von Objekten mit Werkzeugen ausgerüstet werden können und mittels ihrer Gelenke in mehreren Bewegungsachsen beispielsweise hinsichtlich Orientierung, Position und Arbeitsablauf programmierbar sind. Roboter weisen üblicherweise einen Roboterarm mit mehreren durch insbesondere elektrische Antriebe bzw. Motoren automatisch oder manuell verstellbare Gelenke (Achsen) und eine programmierbare Robotersteuerung auf, die während des Betriebs die Bewegungsabläufe des Roboters steuert bzw. regelt.

Jedes der Gelenke kann als ein Drehgelenk ausgebildet sein. Jedes Glied ist ausgebildet, Kräfte und Momente, welche insbesondere von einem Greifer oder Werkzeug, das durch den Roboter gehandhabt, insbesondere bewegt wird, über einen Werkzeugbefestigungsflansch des Roboterarms in den Roboterarm, d.h. in seine Struktur eingeleitet wird, von einem Gelenk an ein folgendes Gelenk weiterzuleiten. Daneben müssen auch Kräfte und Momente, welche von der Eigengewichtskraft des Roboterarms stammen, in das Grundgestell des Roboterarms weitergeleitet werden. Jedes Glied des Roboterarms weist dazu mindestens ein Strukturteil auf, das ausgebildet ist, diese Kräfte und Momente aufnehmen und weiterleiten zu können. Im Allgemeinen ist ein solches Strukturteil hohl ausgebildet und kann beispielsweise von einem Metallgussteil oder einer geschweißten Stahlkonstruktion bestehen, welche beispielsweise Rohrabschnitte aufweisen kann. Indem das Strukturteil hohl ausgebildet ist, kann Platz geschaffen sein, um bspw. einen das Drehmoment übertragenden Riemen aufnehmen zu können. Jedes Glied ist über eines der Gelenke mit einem unmittelbar folgenden Glied des Roboterarms verbunden, insbesondere drehbar verbunden. Dazu kann das jeweilige Gelenk ein Drehlager aufweisen. An jedes Gelenk bzw. jedes Drehlager kann ein eigener Motor, wie beispielsweise ein Elektromotor, insbesondere ein Servomotor, mit zughöriger Antriebssteuerung automatisch antreibbar angekoppelt sein. Die Antriebe bzw. die Motoren werden im Allgemeinen von einer Robotersteuerung des Roboters angesteuert. Durch die Robotersteuerung können die Gelenke mittels der Antriebe bzw. der Motoren gemäß eines Roboterprogramms automatisiert oder in einem Handfahrbetrieb des Roboters antriebsgesteuert verstellt werden, um die Konfiguration des Roboterarms zu verändern. Unter einer Konfiguration wird die Menge der momentanen, einzelnen Achswinkelstellungen der Gelenke des Roboterarms verstanden.

Das wenigstens eine Robotergelenk kann in der kinematischen Kette des Roboterarms derart eingebaut sein, dass die Drehachse des Robotergelenks in allen Konfigurationen des Roboterarms stets vertikal ausgerichtet ist.

Das wenigstens eine Robotergelenk oder ein weiteres Robotergelenk gemäß einer oder mehrerer der beschriebenen Ausführungsformen kann in der kinematischen Kette des Roboterarms derart eingebaut sein, dass die Drehachse des Robotergelenks in allen Konfigurationen des Roboterarms stets horizontal ausgerichtet ist, wobei der Roboter eine diesem Robotergelenk zugeordnete Schwerkraftkompensationsvorrichtung aufweist.

Die beschriebenen Ausführungsvarianten der erfindungsgemäßen Robotergelenke und des beschrieben Roboters können ein kostengünstiges Mensch-Roboter-Kollaborations(MRK)-fähiges, aktuiertes Robotergelenk aufzeigen, welches je nach Aufgabe und Anwendungsfall optional auch mit verschiedenen Zusatzfunktionen ausgestattet werden kann. Das Robotergelenk kann modular zu einer Gelenkkette und somit zu einem Roboterarm aufgebaut werden, insbesondere für außerindustrielle Anwendungen, wie bspw. im Bereich der Service- und Assistenzrobotik. Viele Anwendungen lassen sich hier auf einfache Greif- und Absetz-Bewegungen reduzieren, bei denen insbesondere lediglich vier Freiheitsgrade benötigt werden. Eine derartige kinematische Struktur kann bspw. bestehen aus drei vertikal angeordneten und parallel zueinander ausgerichteten Drehgelenken, sowie einem ebenfalls vertikal wirkenden Schubgelenk, in beliebiger Permutation. Eine solche kinematische Struktur kann als SCARA-Struktur ausgebildet sein. Es beschreibt die angestrebte Grundbeweglichkeit eines Systems, welches aus den hier vorgestellten Robotergelenken erzeugt werden kann. Dieses System kann zusätzlich mit weiteren Gelenkmodulen zu einer redundanten Roboterarm-Struktur ergänzt werden. So kann auch ein flexibles Hintergreifen von Hindernissen ermöglicht werden.

Ein einzelnes Gelenkmodul kann einen aktuierten, rotatorischen Freiheitsgrad besitzen, sowie eine mechanische Schnittstelle aufweisen, die eine Kopplung an weitere Module mit ebenfalls gleichgerichteten Achsen ermöglicht. Hierdurch lassen sich einerseits beliebige ebene Ketten, die redundant oder kinematisch bestimmt sein können, aufbauen. Andererseits lassen sich diese Gelenkmodule auch durch Lineareinheiten dreidimensional erweitern, wobei die gleichen Gelenkmodule in Kombination mit Linear-Komponenten verwendet werden können. Ein Vorteil dieses Aufbaus kann in der Entkopplung der Freiheitsgrade in einer ebene potentialneutrale Bewegung und einer dazu senkrechte Schubbewegung liegen. Da in der Bewegungsebene weder von der Struktur noch von der Nutzlast Gravitationskräfte wirken, sondern nur Trägheits- oder Prozesskräfte, die aber aufgrund der MRK-Anwendungen eher begrenzt sind, können in den Gelenkmodulen sehr einfache, leichte und kostengünstige, insbesondere leistungsschwache Motoren verwendetet werden. Mithilfe eines zusätzlichen Energiespeichersystems, wie bspw. eine Feder, kann das erfindungsgemäße Robotergelenk mit einem kleinen Motor auch für eine vertikale Linearbewegung der ebenen Roboterstruktur zum Einsatz kommen, so dass der Arbeitsraum des Roboters in die Höhe erweitert werden kann. Hierzu kann das betreffende Robotergelenk gedreht eingebaut werden und beispielsweise einen Riemen antreiben, der die ebene Roboterstruktur über eine Führung bewegt. Eine Schwerkraftkompensationsvorrichtung, wie bspw. eine Federunterstützung kann unterstützend wirken bzw. kann die Gewichtkraft ausgleichen, so dass der Motor entlastet werden kann.

Die erfindungsgemäßen Robotergelenke können einen kostengünstigen Aufbau liefern, bei dem auch eine inhärent sichere konstruktive Lösung bereitgestellt werden kann, und dennoch eine akzeptable Nutzlast von mehreren Kilogramm erreicht werden kann.

Wie beschrieben, kann das Robotergelenk, das ein Gelenkmodul bildet, zudem auch eine individuelle Konfigurierbarkeit ermöglichen, um Zusatzfunktionen bedarfsgerecht schnell und kostengünstig ergänzen zu können. Hierfür können beispielsweise kostengünstige Positions- und/oder Momentsensoren, einfach oder doppelt ausgeführt, oder eine Haltebremse hinzugenommen werden. Die Momentsensoren, einfach oder doppelt ausgeführt, können ausgebildet sein, lediglich einen eindeutigen eindimensionalen Belastungszustand zu messen, der aus dem Gelenktorsionsmoment resultiert.

Des Weiteren kann die Nachgiebigkeit des Robotergelenks bzw. des Gelenkmoduls einstellbar ausgeführt sein, so dass die Nachgiebigkeit anwendungsspezifisch vorgegeben bzw. variiert werden kann.

Wie beschrieben basiert die inhärente Sicherheit auf der Begrenzung der Antriebsleistung, die aufgrund des SCARA-ähnlichen Gesamtaufbaus des Roboters nicht die Traglast, sondern nur die Dynamik reduziert. Die Leistungsbegrenzung erfolgt hierbei nicht über die Motorgrenzen, sondern über weitere Bauteile, die den Kraftfluss beim Überschreiten einer eingestellten Last mechanisch unterbrechen oder limitieren. Hier können Sicherheitsrutschkupplungen oder ähnliche Komponenten zum Einsatz kommen. Aufgrund von Kostenreduzierung und Vereinfachung des Aufbaus kann hier auch die Lösung der Funktionsintegration gewählt werden.

Dabei umfasst ein Robotergelenk bzw. ein Gelenkmodul einen zweistufigen Riementrieb, bei dem die Leistungsübertragung in der ersten Stufe über einen kraftschlüssig wirkenden Flachriemen erfolgt und in der zweiten Stufe, für eine synchrone Übertragung, ein spielfreier d.h. formschlüssig wirkender Zahnriemen vorgesehen ist. Durch die Hintereinanderschaltung kann außerdem eine ausreichend hohe Übersetzung erreicht werden, die es ermöglicht, direkt einen kleinen, leistungsschwachen Motor, wie bspw. einen kostengünstigen Schrittmotor, mit hohem Haltemoment einzusetzen, ohne ein zusätzliches Getriebe zu benötigen. Weitere Elemente wie Encoder und Bremse können separat im Gelenkmodul konfiguriert werden. Der Motor des jeweils nächsten Robotergelenks kann in der Abtriebsriemenscheibe des vorherigen Robotergelenks verbaut sein, so dass der Bauraum optimal ausgenutzt wird und eine Schichtung der Glieder eine unbegrenzte Gelenkbewegung, auch über 360° hinweg, ermöglicht.

Der Sicherheitsaspekt der passiven Rücktreibbarkeit wird durch den Flachriemen der ersten Getriebestufe realisiert. Bei einem zu hohen definierten Moment am Abtrieb, welches über den Synchronriemen an die Zwischenstufe weitergegeben wird, reicht die Reibkraft des Riemens auf der Riemenscheibe nicht mehr aus, sodass eine Relativbewegung zwischen Riemen und Scheibe entsteht. Das Moment bei dem diese Durchrutschbewegung erfolgen soll, kann durch die Riemenvorspannung mithilfe von Spannrollen von außen eingestellt werden. Folglich ermöglicht diese Funktion, dass der Roboterarm sowohl im Betrieb als auch im Stillstand einfach manuell verschoben werden kann, oder dass die Kraft bei einer Kollision begrenzt ist, d.h. die Bewegung des Roboters kann bei Zusammenstoß passiv sicher gestoppt werden, obwohl sich die Motoren weiterdrehen. Eine besonders leichtgängige Handführung kann ohne störende Widerstandsmomente erfolgen, wenn sich der Motor im stromlosen Zustand befindet. Der Riementrieb und das Verzichten auf ein hochübersetzendes Getriebe wirken sich dabei begünstigend aus.

Um die exakte Lage und Drehrichtung eines Gelenks selbst dann bestimmen zu können, wenn der Roboter passiv von außen verschoben wird bzw. wenn der Antriebsstrang durchrutscht, wird hier eine abtriebsseitige Positionsmessung verwendet, die einfach oder redundant ausgeführt werden kann. Hierbei kann ein einfacher Aufbau bspw. mit inkrementellen Messvorrichtungen erfolgen. Bei einfacher Positionsmessung kann eine Kodierscheibe mit der Abtriebsriemenscheibe verbunden werden. Bei doppelter Messung eine weitere Kodierscheibe auch am mittleren Riemenscheibenpaket angeordnet sein. Die Striche der Kodierscheibe können bei der Drehung von einem Sensor erfasst werden. Durch die Verwendung von zweiphasigen Sensoren kann darüber hinaus auch die Drehrichtung der Scheibe bestimmt werden. Aufgrund der hohen Auflösung der Scheiben ist eine Umrechnung in einen ausreichend genauen Drehwinkel möglich. Wird sowohl am Motor als auch am mittleren Riemenscheibenpaket gemessen, ist eine redundante Positionsmessung innerhalb eines Antriebstrangs möglich. Diese kann dazu verwendet werden, einfach und eindeutig Antriebsmomente zu bestimmen, indem die durch die Riemennachgiebigkeit bedingte Relativverdrehung gemessen werden kann. Somit sind auch Gelenkmodulkonfigurationen möglich, die eine sensitive Funktionalität besitzen und eine kostengünstige Kraftsensorvorrichtung im Roboterarm realisieren können.

Als Alterative kann auch eine weitere Art der Momentenmessung am Abtrieb zur Anwendung kommen. Um die kinematischen Abmessungen des Roboters bei Riemenmontage und -spannung nicht zu verändern, können die Riemenachsen nicht verschiebbar, d.h. starr bzw. ortsfest ausgeführt sein. Eine einfache Riemenmontage und Einstellung der Riemenvorspannung im Zahnriemen kann durch abgefederte Spannrollen ermöglicht sein. Die Vorspannkraft, aber auch die Führung der Spannrollen, kann über Blattfedern realisiert werden, die je nach Belastung des Lasttrums bzw. des Leertrums entspannt oder gespannt werden. Diese reine Biegeverformung der Blattfedern erfolgt allein aus dem Antriebsmoment und kann bspw. über eine einfache DMS-Anordnung gemessen werden. Werden an beiden Seiten Spannrollen vorgesehen, ist die Momentenmessung redundant. Ein einseitiges Vorspannen und Messen wäre jedoch ebenfalls möglich.

Der Riemen stellt ein eindimensionales Zugmittel dar und entkoppelt bei den beschriebenen Sensoraufbauten das Antriebsmoment von den übrigen fünf Belastungsrichtungen und reduziert damit den mehrachsigen Spannungszustand im Gelenk auf eine Dimension.

Je nach Einsatzbereich des Roboterarms kann eine gewisse Nachgiebigkeit der Glieder bei Kontakt mit der Umgebung oder bei Berührung durch einen Benutzer gewünscht sein. Diese Elastizität kann mit dem hier entwickelten Aufbau im Gegensatz zu klassischen eher starren Robotergelenken eingestellt und somit vorgegeben werden. Durch die Anpassung der Vorspannung des Zahnriemens mit federnd gelagerten Spannrollen ist der Abtrieb und damit das nächste Glied bzw. das nächste Gelenkmodul im Stillstand relativ zum vorherigen Glied bzw. Gelenkmodul elastisch beweglich. Durch die Härte der Federn und/oder die Position der Spannrollen auf den Blattfedern, sowie durch den Vorspannweg im Ruhezustand, kann sowohl die Steifigkeit der Gelenke zueinander, als auch der Wirkbereich der Elastizität aufgabenspezifisch eingestellt werden.

Als zusätzliche Option kann zudem eine Haltebremse integriert werden. Da der Roboter aus Sicherheitsgründen auch bei eingefallener Bremse passiv von außen verschoben werden soll, kann die vorzugsweise formschlüssige Bremse in Antriebsnähe, insbesondere auf der Antriebswelle, positioniert werden. Dies ermöglicht für die Bremsfunktion ebenfalls die Nutzung des Durchrutschverhaltens des Flachriemens im Antriebstrang, wenn eine definierte Kraft auf das Gelenkmodul überschritten wurde.

Eine MRK-Interaktion mit einem Roboter bestehend aus den Gelenkmodulen der vorliegenden Erfindung kann wie folgt ablaufen.

Neben klassischen Programmiermethoden kann ein einfaches Teachen gewählt werden, indem die Antriebe stromlos geschaltet werden und dadurch die Beweglichkeit der Glieder passiv leicht wird. Die abtriebsseitigen Positionssensoren zeichnen dabei die gewünschte Bewegung oder die Posen einzelner Stützpunkte auf. Die automatische Bewegungsausführung des Roboters kann unterbrochen werden, wenn eine Kollision oder ein Wegschieben des Roboterarmes durch den Benutzer auftritt. In beiden Fällen ergibt sich eine Abweichung der Motorsollvorgaben von den gemessenen Ist-Werten des Abtriebs. Hier können Schwellwerte für die Erkennung dieses Zustandes definiert werden. Wird eine Kollision detektiert, bleibt also der Abtrieb mittels Durchrutschen unerwartet stehen, wartet der Antrieb eine definierte Zeit, bevor er die Bewegung aus der tatsächlichen Position heraus fortsetzt. Wird er durch die Kollision weiter gehalten, so verbleibt er beispielsweise in dieser Pose bis eine Bestätigung von außen erfolgt. Ein ähnliches Verhalten kann verwendet werden, wenn der Arm vom Benutzer, absichtlich oder unabsichtlich, zu Seite geschoben wird. Hierbei kann dieser nach kurzem Warten wieder langsam zu seiner Bahn zurückfahren und die ursprüngliche Bewegungsaufgabe fortsetzten. Bei wiederholtem Wegschieben wartet der Arm auf konkrete Bestätigungen von außen. Im Ruhezustand kann das System mit den Haltebremsen in jeder gewünschten Pose blockiert werden. Der Benutzer kann jedoch beim Aufbringen einer definierten Kraft, vergleichbar mit der Verschiebe- und Kollisionskraft im Betrieb, das System selbst im ausgeschalteten Zustand noch passiv verschieben und nach Belieben in eine neue passendere Lage bewegen.

Ein wesentlicher Vorteil, der sich aus der sicherheitsrelevanten Leistungsbegrenzung ergeben kann, ist die passive Rücktreibbarkeit des Systems, welches sowohl ein einfaches Wegschieben der Roboterglieder bei Kollision ermöglicht, als auch ein intuitives Teachen zulässt, ohne dass die einzelnen Gelenke kraftgeregelt angesteuert werden. Eine Positionssensorvorrichtung kann dabei stets den aktuellen Gelenkwinkel erfassen und zwar unabhängig davon, ob das Gelenk aktiv angetrieben, passiv weggeschoben oder bei drehendem Antrieb, z.B. durch eine Kollision, festgehalten wird.

Zusammenfassend ermöglicht das erfindungsgemäße Robotergelenk bzw. das erfindungsgemäße Gelenkmodul individuelle, ebene Roboterkinematiken kostengünstig aufzubauen, die durch weitere Gelenkmodule, im Sinne von Zusatzachsen, räumlich ergänzt werden können. Dabei ist das Robotersystem selbst ohne kostspielige Sensorik und trotz akzeptabler Traglast von mehreren Kilogramm inhärent sicher und lässt sich benutzerfreundlich und intuitiv passiv verschieben. Durch einen solchen Modulbaukasten lässt sich der interne Aufbau frei konfigurieren und Zusatzfunktionen einbinden.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines beispielhaften Roboters mit einem Roboterarm und einer Robotersteuerung in der Bauart eines SCARA-Roboters;
- Fig. 2: eine schematische Darstellung eines erfindungsgemäßen Robotergelenks;
- Fig. 3: eine schematische Darstellung einer ersten Ausführungsform einer Getriebevorrichtung des erfindungsgemäßen Robotergelenks mit einer Zahnriemenabtastvorrichtung;
- Fig. 4: eine schematische Darstellung einer ersten Ausfüh-rungsform einer Getriebevorrichtung des erfindungs-gemäßen Robotergelenks mit Winkellagegebern;
- Fig. 5: eine perspektivische Ansicht des Robotergelenks ge-mäß Fig. 2 bei entferntem Roboterglied;
- Fig. 6: eine Schnittansicht des erfindungsgemäßen Roboterge-lenks gemäß Fig. 2 in einem Zusammenbau mit einem Motorgehäuse eines zweiten, nicht näher dargestell-ten, identischen Robotergelenks;
- Fig. 7: eine Schnittansicht zweier Robotergelenke gemäß Fig. 2 im Zusammenbau;
- Fig. 8: eine perspektivische Ansicht der beiden Roboterge-lenke gemäß Fig. 7 in einer gestreckten Winkelanord-nung des einen Robotergelenks; und
- Fig. 9: eine perspektivische Ansicht der beiden Roboterge-lenke gemäß Fig. 7 in einer abgewinkelten Winkelan-ordnung des einen Robotergelenks.

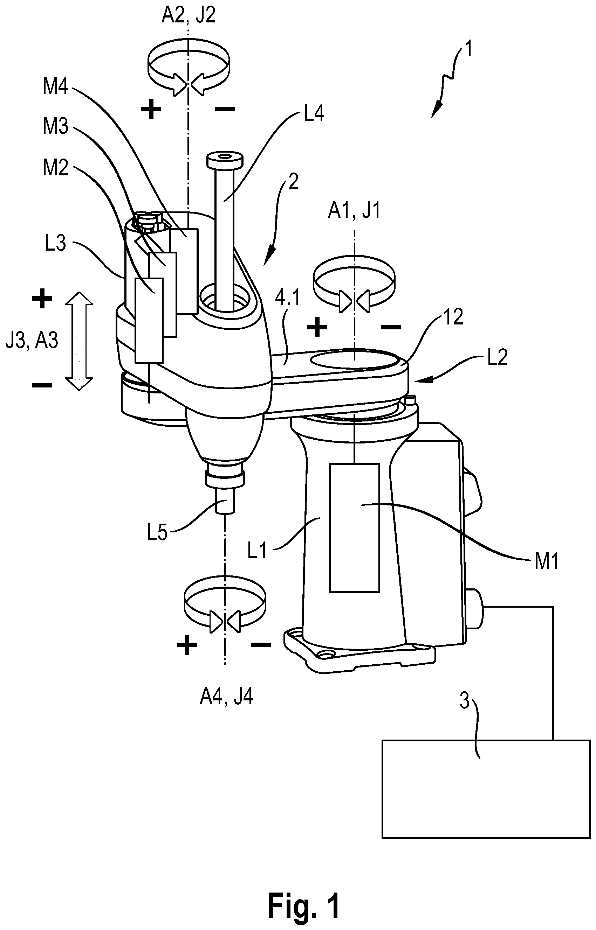

Die Fig. 1 zeigt einen Roboter 1 in einer beispielhaften Ausführung als ein so genannter SCARA-Roboter, der einen Roboterarm 2 und eine Robotersteuerung 3 aufweist. Der Roboterarm 2 umfasst im Falle des vorliegenden Ausführungsbeispiels fünf, nacheinander angeordnete und mittels Gelenke J1-J4 gegeneinander verstellbare Glieder L1-L5. Im Falle des in Fig. 1 gezeigten Ausführungsbeispiels ist das Glied L5 als ein Werkzeugflansch ausgebildet, zum Befestigen beispielsweise eines Werkzeugs oder eines Robotergreifers. Jedes der Gelenke J1-J4 bildet eine Achse A1-A4 des Roboters 1.

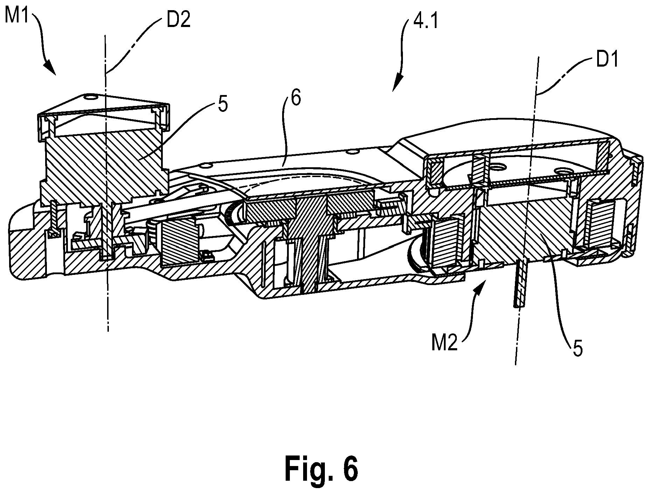

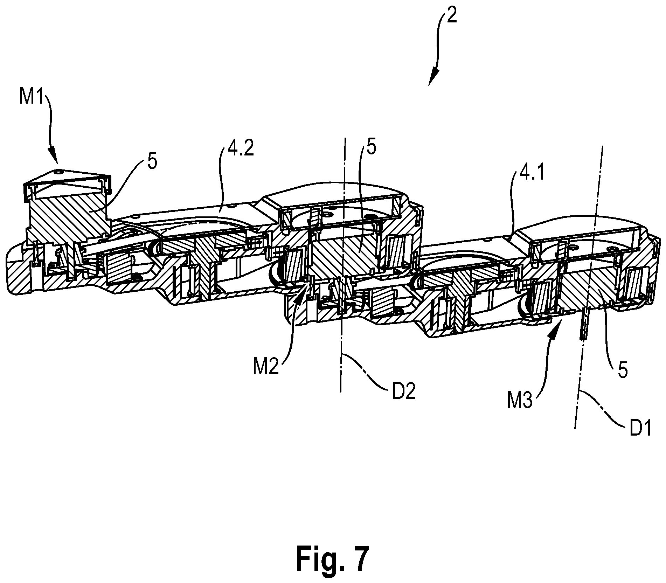

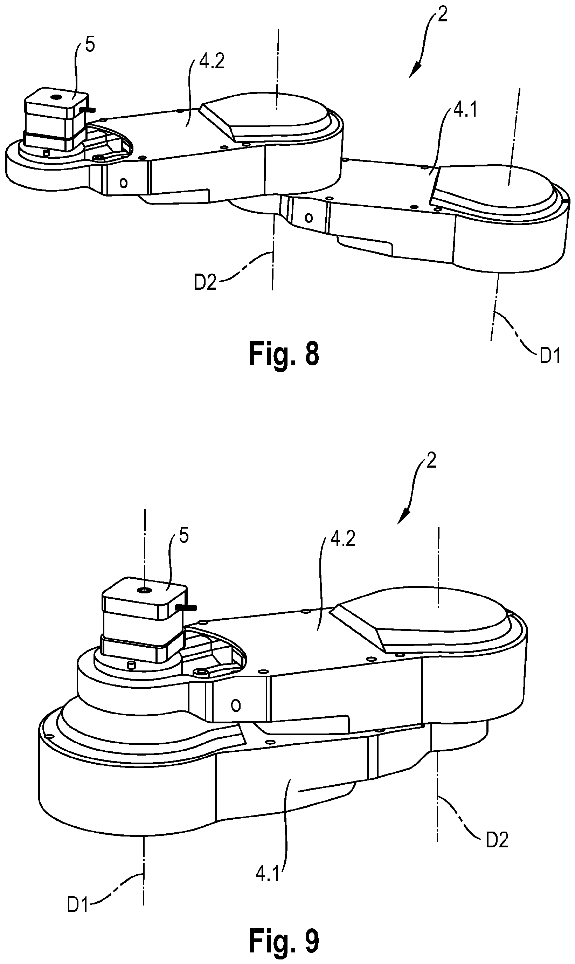

Der Roboterarm 2 weist Motoren M1-M4 auf, welche jeweils an eines der Gelenke J1-J4 angekoppelt sind, und die gemäß eines von der Robotersteuerung 3 ausgeführten Roboterprogramms automatisiert oder in einem Handfahrbetrieb des Roboters 1 antriebsgesteuert durch die Motoren M1-M4 verstellbar sind, um die Konfiguration des Roboterarms 2 zu verändern. Im Falle des vorliegenden Ausführungsbeispiels der Fig.1 kann ein einzelnes beispielhaftes Robotergelenk 4.1 erfindungsgemäß ausgebildet sein. Im Falle der Ausführungsbeispiele der Fig.6 bis Fig. 9 kann der Roboterarm 2 jedoch auch, wie dargestellt zwei erfindungsgemäß ausgebildete Robotergelenke 4.1 und 4.2 aufweisen. Alternativ, jedoch nicht dargestellt, kann der Roboterarm 2 auch mehr als zwei erfindungsgemäß ausgebildete Robotergelenke 4.1, 4.2 aufweisen.

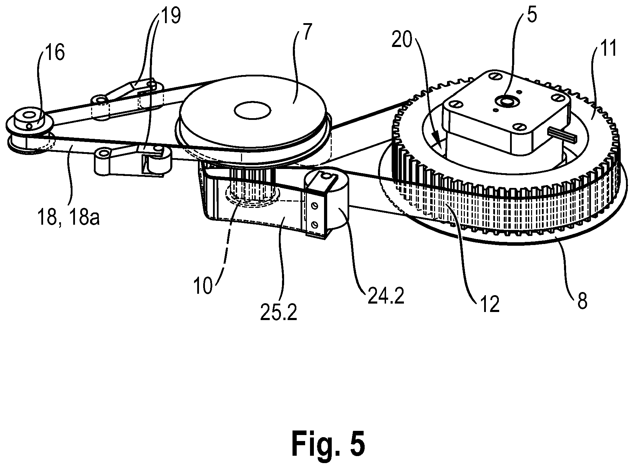

Demgemäß können zumindest zwei in der kinematischen Kette des Roboterarms 2 aufeinander folgende Glieder L1-L5 des Roboterarms 2 ein erstes Robotergelenk 4.1 gemäß einer oder mehrerer der beschriebenen Ausführungsformen und ein zweites Robotergelenk 4.2 gemäß einer oder mehrerer der beschriebenen Ausführungsformen aufweisen, wobei an jedem Roboterglied 4.1, 4.2 der jeweilige Motor M1, M2 mit seinem Motorgehäuse 5 zumindest teilweise von dem Roboterglied 6, das insoweit ein Gehäuse des Robotergelenks 4.1 bildet bzw. ein Strukturbauteil des Roboterarms 2 bildet, vorspringend angeflanscht ist, wie dies insbesondere in der Fig. 6 dargestellt ist. Ein jeweiliges Abtriebsrad 8 des Robotergelenks 4.1, 4.2 weist einen Hohlraum 20 auf, so dass der vorspringende Teil des Motorgehäuses 5 des einen Robotergelenks 4.1 in dem Hohlraum 20 des anderen Robotergelenks 4.2 aufgenommen ist, wie dies in Fig. 5 bis Fig. 7 gezeigt ist.

Im Falle der Ausführungsbeispiele der Fig.6 bis Fig. 9 sind die beiden Robotergelenke 4.1 und 4.2 in der kinematischen Kette des Roboterarms 2 derart eingebaut, dass die Drehachsen D1, D2 der Robotergelenke 4.1 und 4.2 in allen Konfigurationen des Roboterarms 2 stets vertikal ausgerichtet sind.

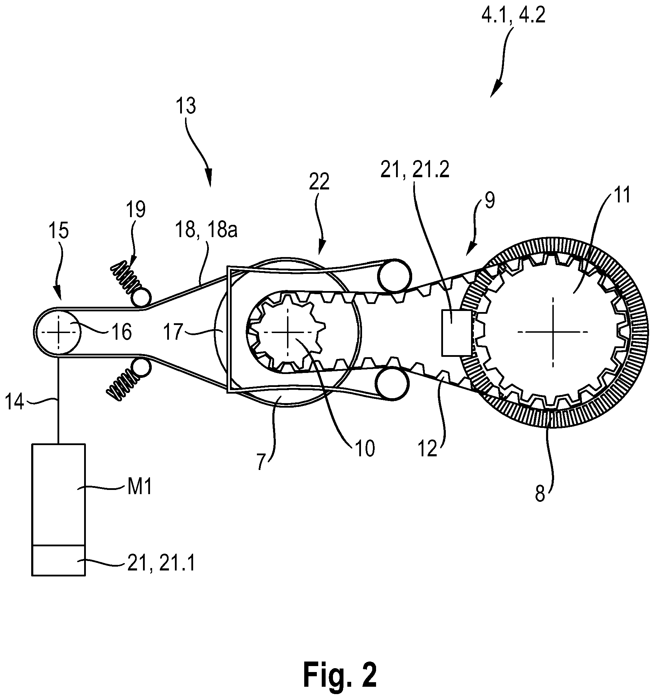

In Fig. 2 bis Fig. 6 sind verschiedene Ausführungsformen des inneren prinzipiellen Aufbaus von erfindungsgemäßen Robotergelenken schematisch gezeigt.

Generell weist das Robotergelenk 4.1, 4.2 ein Roboterglied 6 (Fig. 6) auf, das ein Gehäuse des Robotergelenks 4.1, 4.2 bildet bzw. ein Strukturbauteil des Roboterarms 2 bildet.

In Fig. 2 bis Fig. 6 ist der innere Aufbau ohne das Roboterglied 6, d.h. ohne das Gehäuse bzw. ohne das Strukturbauteil des Roboterarms 2 schematisch gezeigt.

Das Robotergelenk 4.1, 4.2 weist ein an dem Roboterglied 6 drehbar gelagertes Antriebsrad 7 und ein an dem Roboterglied 6 drehbar gelagertes Abtriebsrad 8 auf. Eine Getriebevorrichtung 9 koppelt das Antriebsrad 7 mit dem Abtriebsrad 8 zum Übertragen eines Antriebsmoments und ist als ein formschlüssiger Zugmitteltrieb ausgebildet, der eine an das Antriebsrad 7 drehmomentübertragend angeschlossene Eingangssynchronscheibe 10, eine an das Abtriebsrad 8 drehmomentübertragend angeschlossene Ausgangssynchronscheibe 11 und einen die Eingangssynchronscheibe 10 und die Ausgangssynchronscheibe 11 formschlüssig umschlingenden Zahnriemen 12 aufweist.

Neben der Getriebevorrichtung 9 weist das Robotergelenk 4.1, 4.2 eine Antriebsverbindung 13 auf. Die Antriebsverbindung 13 umfasst einen das Antriebsrad 7 antreibenden Motor M1, dessen Motorwelle 14 zum Einleiten des Antriebsmoments über die Antriebsverbindung 13 mit dem Antriebsrad 7 verbunden ist.

Erfindungsgemäß weist das Robotergelenk 4.1, 4.2 bzw. die Antriebsverbindung 13 eine Sicherheitskupplung 15 auf, die ausgebildet ist, bei einem Überschreiten eines vorgegebenen Grenzmomentes die Antriebsverbindung 13 zwischen dem Motor M1 und dem Antriebsrad 7 zu trennen und bei einem Unterschreiten des vorgegebenen Grenzmomentes die Antriebsverbindung 13 zwischen dem Motor M1 und dem Antriebsrad 7 wiederherzustellen.

Die Sicherheitskupplung 15 ist im Falle der vorliegenden Ausführungsbeispiele der Fig. 2 bis Fig. 9 als ein kraftschlüssiger Zugmitteltrieb ausgebildet, mit einer an die Motorwelle 14 drehmomentübertragend angeschlossenen Antriebsscheibe 16, einer an das Antriebsrad 7 drehmomentübertragend angeschlossenen Abtriebsscheibe 17 und einem die Antriebsscheibe 16 und die Abtriebsscheibe 17 kraftschlüssig umschlingenden Zugmittel 18.

Der Zugmitteltrieb ist als ein Riementrieb ausgebildet, d.h. das Zugmittel 18 weist einen die Antriebsscheibe 16 und die Abtriebsscheibe 17 kraftschlüssig umschlingenden Riemen 18a auf.

Dem Zugmittel 18 bzw. Riemen 18a ist eine einstellbare, das Durchrutschmoment des Riementriebs bestimmende Riemenspannvorrichtung 19 zugeordnet. Die Riemenspannvorrichtung 19 ist ausgebildet, durch Einstellen des Durchrutschmoments das Grenzmoment der Sicherheitskupplung 15 vorzugeben.

Darüber hinaus weist das Robotergelenk 4.1, 4.2 eine Sensorvorrichtung 21 auf, die ausgebildet ist, eine auftretende Lageverstellung der Motorwelle 14 bezüglich des Antriebsrads 7 in ihrer Größe zu erfassen. Die Sensorvorrichtung 21 kann demgemäß ausgebildet sein, die Drehstellung des Abtriebsrads 8 bzw. der Ausgangssynchronscheibe 11 zu erfassen, da das Abtriebsrad 8 bzw. die Ausgangssynchronscheibe 11 mittels der Getriebevorrichtung 9 schlupffreie an das Antriebsrad 7 angekoppelt ist.

Zur Bildung der Sensorvorrichtung 21 kann beispielsweise der Motor M1 einen Motorwellen-Winkellagegeber 21.1 aufweisen, der ausgebildet ist, die Drehstellung der Motorwelle 14 zu erfassen, und die Sensorvorrichtung 21 einen Abtriebsrad-Winkellagegeber 21.2 aufweisen, der ausgebildet ist, die Drehstellung des Abtriebsrads 8 zu erfassen, wobei sowohl der Motorwellen-Winkellagegeber 21.1, als auch der Abtriebsrad-Winkellagegeber 21.2 eingerichtet ist, auf Grundlage eines Vergleichs der momentanen Drehstellungen von Motorwelle 14 und Abtriebsrad 8, die auftretende Lageverstellung der Motorwelle 14 bezüglich des Antriebsrads 7 in ihrer Größe zu erfassen.

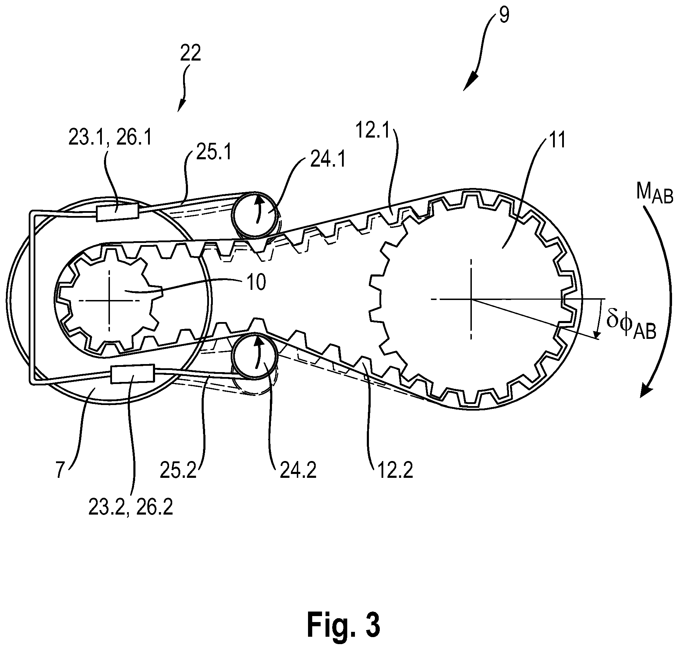

Die Getriebevorrichtung 9 weist außerdem eine Zahnriemenabtastvorrichtung 22 auf, die zum Abtasten des Zahnriemens 12 ausgebildet ist, wobei die Zahnriemenabtastvorrichtung 22, wie in Fig. 3 dargestellt, einen ersten Aufnehmer 23.1 zur Erfassung der Zahnriemenspannung am Lasttrum 12.1 des Zahnriemens 12 und einen zweiten Aufnehmer 23.2 zur Erfassung der Zahnriemenspannung am Leertrum 12.2 des Zahnriemens 12 aufweist.

Dazu weist im Falle des vorliegenden Ausführungsbeispiels die Zahnriemenabtastvorrichtung 22 eine am Lasttrum 12.1 des Zahnriemens 12 anliegende erste Tastrolle 24.1 auf, die mittels einer ersten Biegefeder 25.1 federvorgespannt gelagert ist. Außerdem weist die Zahnriemenabtastvorrichtung 22 eine am Leertrum 12.2 des Zahnriemens 12 anliegende zweite Tastrolle 24.2 auf, die mittels einer zweiten Biegefeder 25.2 federvorgespannt gelagert ist, wobei die erste Biegefeder 25.1 mit einem ersten Dehnungssensor 26.1 versehen ist und die zweite Biegefeder 25.2 mit einem zweiten Dehnungssensor 26.2 versehen ist.

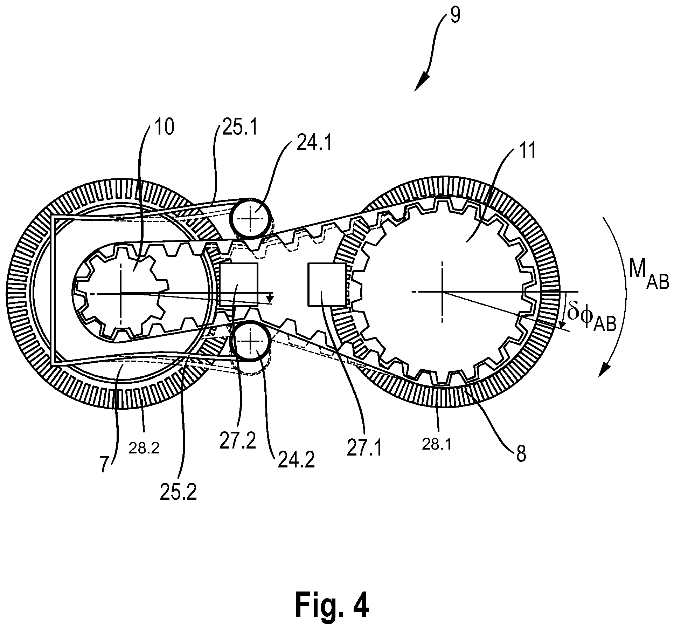

Darüber hinaus kann in einer Ausführungsvariante, wie in Fig. 4 gezeigt, die Getriebevorrichtung 9 einen ersten Winkellagegeber 27.1 aufweisen, der eingerichtet ist, die Drehstellung des Abtriebsrads 8 bzw. der Ausgangssynchronscheibe 11 zu erfassen und einen zweiten Winkellagegeber 27.2 aufweisen, der eingerichtet ist, die Drehstellung des Antriebsrads 7 bzw. der Eingangssynchronscheibe 10 zu erfassen. Dem ersten Winkellagegeber 27.1 ist eine Maßverkörperung in Form von ersten Inkrementalstrichen 28.1 zugeordnet und dem zweiten Winkellagegeber 27.2 ist eine Maßverkörperung in Form von zweiten Inkrementalstrichen 28.2 zugeordnet. Mittels des ersten Winkellagegebers 27.1 und des zweiten Winkellagegebers 27.2, insbesondere aufgrund einer dadurch feststellbaren Drehwinkelverstellung von Antriebsrad 7 relativ zum Abtriebsrad 8, kann die Zahnriemenspannung am Lasttrum 12.1 des Zahnriemens 12 und die Zahnriemenspannung am Leertrum 12.2 des Zahnriemens 12 bestimmt werden. Die Zahnriemenspannungen am Lasttrum 12.1 und am Leertrum 12.2 wiederum sind ein Maß für das vom Antriebsrad 7 auf das Abtriebsrad 8 übertragene Drehmoment.

## Patentansprüche

1. Robotergelenk, aufweisend
- ein Roboterglied (6),
- ein an dem Roboterglied (6) drehbar gelagertes Antriebsrad (7) und ein an dem Roboterglied (6) drehbar gelagertes Abtriebsrad (8),
- eine das Antriebsrad (7) mit dem Abtriebsrad (8) zum Übertragen eines Antriebsmoments koppelnde Getriebevorrichtung (9),
- sowie einen das Antriebsrad (7) antreibenden Motor (M1), dessen Motorwelle (14) zum Einleiten des Antriebsmoments über eine Antriebsverbindung (13) mit dem Antriebsrad (7) verbunden ist,
**gekennzeichnet durch** eine Sicherheitskupplung (15), die ausgebildet ist, bei einem Überschreiten eines vorgegebenen Grenzmomentes die Antriebsverbindung (13) zwischen der Motorwelle (14) und dem Antriebsrad (7) zu trennen und bei einem Unterschreiten des vorgegebenen Grenzmomentes die Antriebsverbindung (13) zwischen der Motorwelle (14) und dem Antriebsrad (7) wiederherzustellen, und eine Sensorvorrichtung (21), die ausgebildet ist, die Drehwinkelstellung des Abtriebsrads (8) zu erfassen.

2. Robotergelenk nach Anspruch 1, **dadurch gekennzeichnet, dass** die Sicherheitskupplung (15) einen kraftschlüssigen Zugmitteltrieb aufweist, mit einer an die Motorwelle (14) drehmomentübertragend angeschlossenen Antriebsscheibe (16), einer an das Antriebsrad (7) drehmomentübertragend angeschlossenen Abtriebsscheibe (17) und einem die Antriebsscheibe (16) und die Abtriebsscheibe (17) kraftschlüssig umschlingenden Zugmittel (18).

3. Robotergelenk nach Anspruch 2, **dadurch gekennzeichnet, dass** der Zugmitteltrieb (18) als ein Riementrieb ausgebildet ist, der einen die Antriebsscheibe (16) und die Abtriebsscheibe (17) kraftschlüssig umschlingenden Riemen (18a) aufweist, und eine einstellbare, das Durchrutschmoment des Riementriebs bestimmende Riemenspannvorrichtung (19) aufweist, die ausgebildet ist, durch Einstellen des Durchrutschmoments das Grenzmoment der Sicherheitskupplung (15) vorzugeben.

4. Robotergelenk nach einem der Ansprüche 1 bis 3, **dadurch gekennzeichnet, dass** die Getriebevorrichtung (9) als ein formschlüssiger Zugmitteltrieb ausgebildet ist, der eine an das Antriebsrad (7) drehmomentübertragend angeschlossene Eingangssynchronscheibe (10), eine an das Abtriebsrad (8) drehmomentübertragend angeschlossene Ausgangssynchronscheibe (11) und einen die Eingangssynchronscheibe (10) und die Ausgangssynchronscheibe (11) formschlüssig umschlingenden Zahnriemen (12) aufweist.

5. Robotergelenk nach Anspruch 4, **dadurch gekennzeichnet, dass** die Getriebevorrichtung (9) eine Zahnriemenabtastvorrichtung (22) umfasst, die zum Abtasten des Zahnriemens (12) ausgebildet ist, wobei die Zahnriemenabtastvorrichtung (22) einen ersten Aufnehmer (23.1) zur Erfassung der Zahnriemenspannung am Lasttrum (12.1) des Zahnriemens (12) und einen zweiten Aufnehmer (23.2) zur Erfassung der Zahnriemenspannung am Leertrum (12.2) des Zahnriemens (12) aufweist.

6. Robotergelenk nach Anspruch 5, **dadurch gekennzeichnet, dass** die Zahnriemenabtastvorrichtung (22) eine am Lasttrum (12.1) des Zahnriemens (12) anliegende erste Tastrolle (24.1) aufweist, die mittels einer ersten Biegefeder (25.1) federvorgespannt gelagert ist, eine am Leertrum (12.2) des Zahnriemens (12) anliegende zweite Tastrolle (24.2) aufweist, die mittels einer zweiten Biegefeder (25.2) federvorgespannt gelagert ist, wobei die erste Biegefeder (24.1) mit einem ersten Dehnungssensor (26.1) versehen ist und die zweite Biegefeder (24.2) mit einem zweiten Dehnungssensor (26.2) versehen ist.

7. Robotergelenk nach einem der Ansprüche 4 bis 6, **dadurch gekennzeichnet, dass** die Getriebevorrichtung (9) einen ersten Winkellagegeber (27.1) aufweist, der eingerichtet ist, die Drehstellung des Abtriebsrads (8) bzw. der Ausgangssynchronscheibe (11) zu erfassen und einen zweiten Winkellagegeber (27.2) aufweist, der eingerichtet ist, die Drehstellung des Antriebsrads (7) bzw. der Eingangssynchronscheibe (10) zu erfassen.

8. Robotergelenk nach einem der Ansprüche 1 bis 7, **dadurch gekennzeichnet, dass** die Sensorvorrichtung (21) ausgebildet ist, die Drehstellung des Abtriebsrads (8) bzw. der Ausgangssynchronscheibe (11) zu erfassen.

9. Robotergelenk nach Anspruch 8, **dadurch gekennzeichnet, dass** der Motor (M1) einen Motorwellen-Winkellagegeber (21.1) aufweist, der ausgebildet ist, die Drehstellung der Motorwelle (14) zu erfassen, die Sensorvorrichtung (21) einen Abtriebsrad-Winkellagegeber (21.2) aufweist, der ausgebildet ist, die Drehstellung des Abtriebsrads (8) zu erfassen, und sowohl der Motorwellen-Winkellagegeber (21.1), als auch der Abtriebsrad-Winkellagegeber (21.2) eingerichtet sind, auf Grundlage eines Vergleichs der momentanen Drehstellungen von Motorwelle (14) und Abtriebsrad (8), die auftretende Lageverstellung der Motorwelle (14) bezüglich des Antriebsrads (7) in ihrer Größe zu erfassen.

10. Roboter, aufweisend eine Robotersteuerung (13) und einen Roboterarm (2) mit mehreren durch Glieder (12) verbundenen Gelenken (11), die von Motoren des Roboters (1), welche an die Gelenke (11) angekoppelt sind, gemäß eines von der Robotersteuerung (13) ausgeführten Roboterprogramms automatisiert oder in einem Handfahrbetrieb des Roboters (1) antriebsgesteuert verstellbar sind, um die Konfiguration des Roboterarms (2) zu verändern, wobei zumindest zwei in der kinematischen Kette des Roboterarms (2) aufeinander folgende Glieder (12) des Roboterarms (2) ein erstes Robotergelenk (4.1) gemäß einem der Ansprüche 1 bis 9 und ein zweites Robotergelenk (4.2) gemäß einem der Ansprüche 1 bis 9 aufweisen, wobei an jedem Roboterglied (4.1, 4.2) der Motor (M1-M4) mit seinem Motorgehäuse (5) zumindest teilweise von dem Roboterglied (4.1, 4.2) vorspringend angeflanscht ist und das jeweilige Abtriebsrad (8) einen Hohlraum (20) aufweist, so dass der vorspringende Teil des Motorgehäuses (5) des einen Robotergelenks (4.1) in dem Hohlraum (20) des anderen Robotergelenks (4.2) aufgenommen ist.

11. Roboter nach Anspruch 10, **dadurch gekennzeichnet, dass** das wenigstens eine Robotergelenk (4.1, 4.2) in der kinematischen Kette des Roboterarms (2) derart eingebaut ist, dass die Drehachse (D1, D2) des Robotergelenks (4.1, 4.2) in allen Konfigurationen des Roboterarms (2) stets vertikal ausgerichtet ist.

12. Roboter nach Anspruch 10 oder 11, **dadurch gekennzeichnet, dass** das wenigstens eine Robotergelenk (4.1, 4.2) oder ein weiteres Robotergelenk gemäß einem der Ansprüche 1 bis 9 in der kinematischen Kette des Roboterarms (2) derart eingebaut ist, dass die Drehachse (D1, D2) des Robotergelenks (4.1, 4.2) in allen Konfigurationen des Roboterarms (2) stets horizontal ausgerichtet ist und der Roboter (1) eine diesem Robotergelenk (4.1, 4.2) zugeordnete Schwerkraftkompensationsvorrichtung aufweist.

## Claims

1. Robot joint, having
- a robot link (6),
- a drive wheel (7) rotatably mounted on the robot member (6) and an output wheel (8) rotatably mounted on the robot member (6),
- a transmission device (9) coupling the drive wheel (7) to the driven wheel (8) for transmitting a drive torque, and
- a motor (M1) driving the drive wheel (7), the motor shaft (14) of which is connected to the drive wheel (7) via a drive connection (13) for introducing the drive torque,
**characterized by** a safety clutch (15) which is designed to disconnect the drive connection (13) between the motor shaft (14) and the drive wheel (7) if a predetermined limit torque is exceeded and if the drive falls below the specified limit torque the drive connection (13) between to restore the motor shaft (14) and the drive wheel (7),
and a sensor device (21) which is designed to detect the angular position of the driven wheel (8).

2. Robot joint according to claim 1, **characterized in that** the safety clutch (15) has a non-positive traction mechanism drive, with a drive disk (16) connected to the motor shaft (14) for torque transmission, a drive disk (17) connected with the drive wheel (7) and torque transmission a traction means (18) which non-positively wraps around the drive pulley (16) and the driven pulley (17).

3. Robot joint according to claim 2, **characterized in that** the traction mechanism (18) is designed as a belt drive, which has a drive belt (16) and the driven pulley (17) non-positively wrapping belt (18a), and an adjustable, the slip moment of the Has belt drive determining belt tensioning device (19) which is designed to set the limit torque of the safety clutch (15) by adjusting the slip torque.

4. Robot joint according to one of claims 1 to 3, **characterized in that** the gear device (9) is designed as a positive traction drive, which is connected to the drive wheel (7) torque-transmitting input synchronous disc (10), one to the driven wheel (8) torque-transmitting connected output synchronous disc (11) and a toothed belt (12) which surrounds the input synchronous disc (10) and the output synchronous disc (11) in a form-fitting manner.

5. Robot joint according to claim 4, **characterized in that** the gear device (9) comprises a toothed belt scanning device (22) which is designed for scanning the toothed belt (12), wherein the toothed belt scanning device (22) has a first sensor (23.1) for detecting the toothed belt tension on the load strand (12.1) of the toothed belt (12) and a second sensor (23.2) for detecting the toothed belt tension on the empty strand (12.2) of the toothed belt (12).

6. Robot joint according to claim 5, **characterized in that** the toothed belt scanning device (22) has a first contact roller (24.1) which bears against the load strand (12.1) of the toothed belt (12) and is spring-loaded by means of a first spiral spring (25.1), one on the empty strand (12.2) of the toothed belt (12) has a second contact roller (24.2) which is spring-loaded by means of a second spiral spring (25.2), the first spiral spring (24.1) being provided with a first strain sensor (26.1) and the second spiral spring (24.2) is provided with a second strain sensor (26.2).

7. Robot joint according to one of claims 4 to 6, **characterized in that** the gear device (9) has a first angular position encoder (27.1), which is set up to detect the rotational position of the driven wheel (8) or the output synchronous disc (11) and one Second angular position encoder (27.2), which is set up to detect the rotational position of the drive wheel (7) or the input synchronous disc (10).

8. Robot joint according to one of claims 1 to 7, **characterized in that** the sensor device (21) is designed to detect the rotational position of the driven wheel (8) or the output synchronous disc (11).

9. Robot joint according to claim 8, **characterized in that** the motor (M1) has a motor shaft angular position encoder (21.1) which is designed to detect the rotational position of the motor shaft (14), the sensor device (21) an output gear angular position encoder (21.2), which is designed to detect the rotational position of the driven wheel (8), and both the motor shaft angular position encoder (21.1) and the driven wheel angular position encoder (21.2) are set up, based on a comparison of the current rotational positions of the motor shaft (14) and driven wheel (8) to detect the positional displacement of the motor shaft (14) with respect to the drive wheel (7) in size.

10. Robot, comprising a robot controller (13) and a robot arm (2) with a plurality of joints (11) connected by links (12) by motors of the robot (1) which are coupled to the joints (11) according to one The robot program executed by the robot controller (13) can be automated or can be adjusted in a drive-controlled manner in a manual driving operation of the robot (1) in order to change the configuration of the robot arm (2), at least two links (12) following one another in the kinematic chain of the robot arm (2) of the robot arm (2) have a first robot joint (4.1) according to one of claims 1 to 9 and a second robot joint (4.2) according to one of claims 1 to 9, the motor (M1-M4) with its motor housing (5) at least partially flanged projecting from the robot member (4.1, 4.2) and the respective driven wheel (8) has a cavity (20) so that the projecting part of the motor housing (5) of the one robot joint (4.1) is received in the cavity (20) of the other robot joint (4.2).

11. Robot according to claim 10, **characterized in that** the at least one robot joint (4.1, 4.2) is installed in the kinematic chain of the robot arm (2) such that the axis of rotation (D1, D2) of the robot joint (4.1, 4.2) in all Configurations of the robot arm (2) is always aligned vertically.

12. Robot according to claim 10 or 11, **characterized in that** the at least one robot joint (4.1, 4.2) or a further robot joint according to one of claims 1 to 9 is installed in the kinematic chain of the robot arm (2) such that the axis of rotation (D1, D2) of the robot joint (4.1, 4.2) is always aligned horizontally in all configurations of the robot arm (2) and the robot (1) has a gravity compensation device assigned to this robot joint (4.1, 4.2).

## Revendications

1. Joint de robot, ayant
- une liaison robot (6),
- une roue d'entraînement (7) montée à rotation sur l'élément robot (6) et une roue de sortie (8) montée à rotation sur l'élément robot (6),
- un dispositif de transmission (9) couplant la roue motrice (7) à la roue motrice (8) pour transmettre un couple moteur,
- et un moteur (M1) entraînant la roue motrice (7), dont l'arbre moteur (14) est relié à la roue motrice (7) via une liaison motrice (13) pour introduire le couple moteur,
**caractérisé par** un embrayage de sécurité (15) conçu pour déconnecter la connexion d'entraînement (13) entre l'arbre du moteur (14) et la roue motrice (7) si un couple limite prédéterminé est dépassé et si l'entraînement tombe en dessous du couple limite spécifié la liaison d'entraînement (13) entre pour restaurer l'arbre moteur (14) et la roue motrice (7),
et un dispositif capteur (21) qui est conçu pour détecter la position angulaire de la roue entraînée (8).

2. Joint de robot selon la revendication 1, **caractérisé en ce que** l'embrayage de sécurité (15) présente un mécanisme d'entraînement à traction non positive, avec un disque d'entraînement (16) relié à l'arbre moteur (14) pour la transmission du couple, un disque d'entraînement (17) relié à la roue d'entraînement (7) et à la transmission de couple à un moyen de traction (18) qui s'enroule de manière non positive autour de la poulie d'entraînement (16) et de la poulie menée (17).

3. Joint de robot selon la revendication 2, **caractérisé en ce que** le mécanisme de traction (18) est conçu comme un entraînement par courroie, qui comporte une courroie d'entraînement (16) et la poulie menée (17) enroulant de manière non positive la courroie (18a), et un moment de glissement réglable du dispositif de tension de courroie déterminant la transmission par courroie Has (19) qui est conçu pour régler le couple limite de l'embrayage de sécurité (15) en ajustant le couple de glissement.

4. Joint de robot selon l'une des revendications 1 à 3, **caractérisé en ce que** le dispositif d'engrenage (9) est conçu comme un entraînement à traction positive, qui est relié à la roue motrice (7) à disque synchrone d'entrée transmettant le couple (10), une au disque synchrone de sortie connecté transmettant le couple (11) à la roue entraînée (8) et une courroie crantée (12) qui entoure le disque synchrone d'entrée (10) et le disque synchrone de sortie (11) d'une manière ajustée.

5. Joint de robot selon la revendication 4, **caractérisé en ce que** le dispositif d'engrenage (9) comprend un dispositif de balayage de courroie crantée (22) qui est conçu pour balayer la courroie crantée (12), dans lequel le dispositif de balayage de courroie crantée (22) a un un premier capteur (23.1) pour détecter la tension de la courroie crantée sur le brin de charge (12.1) de la courroie crantée (12) et un deuxième capteur (23.2) pour détecter la tension de la courroie crantée sur le brin vide (12.2) de la courroie crantée (12).

6. Joint de robot selon la revendication 5, **caractérisé en ce que** le dispositif de balayage de courroie crantée (22) présente un premier galet de contact (24.1) qui prend appui contre le brin de charge (12.1) de la courroie crantée (12) et est sollicité par ressort par au moyen d'un premier ressort hélicoïdal (25.1), un sur le brin vide (12.2) de la courroie crantée (12) a un second rouleau de contact (24.2) qui est chargé par ressort au moyen d'un deuxième ressort hélicoïdal (25.2), le le premier ressort hélicoïdal (24.1) étant muni d'un premier capteur de contrainte (26.1) et le second ressort spiral (24.2) est pourvu d'un second capteur de contrainte (26.2).

7. Joint de robot selon l'une des revendications 4 à 6, **caractérisé en ce que** le dispositif d'engrenage (9) présente un premier codeur de position angulaire (27.1), qui est configuré pour détecter la position de rotation de la roue motrice (8) ou du disque synchrone de sortie (11) et un second codeur de position angulaire (27.2), qui est configuré pour détecter la position de rotation de la roue motrice (7) ou du disque synchrone d'entrée (10).

8. Joint de robot selon l'une des revendications 1 à 7, **caractérisé en ce que** le dispositif capteur (21) est conçu pour détecter la position de rotation de la roue entraînée (8) ou du disque synchrone de sortie (11).

9. Joint de robot selon la revendication 8, **caractérisé en ce que** le moteur (M1) présente un codeur de position angulaire d'arbre moteur (21.1) qui est conçu pour détecter la position de rotation de l'arbre moteur (14), le dispositif capteur (21) un codeur de position angulaire d'engrenage de sortie (21.2), qui est conçu pour détecter la position de rotation de la roue motrice (8), et à la fois le codeur de position angulaire de l'arbre moteur (21.1) et le codeur de position angulaire de la roue motrice (21.2) sont configurés, sur la base d'une comparaison des positions de rotation actuelles de l'arbre du moteur (14) et de la roue entraînée (8) pour détecter le déplacement de position de l'arbre du moteur (14) par rapport à la roue d'entraînement (7) en taille.

10. Robot, comprenant un contrôleur de robot (13) et un bras de robot (2) avec une pluralité d'articulations (11) reliées par des liaisons (12) par des moteurs du robot (1) qui sont couplés aux articulations (11) selon à un Le programme du robot exécuté par le contrôleur de robot (13) peut être automatisé ou peut être réglé de manière contrôlée par l'entraînement dans une opération de conduite manuelle du robot (1) afin de changer la configuration du bras du robot (2), au moins deux maillons (12) se succédant dans la chaîne cinématique du bras robot (2) du bras robot (2) présentent une première articulation robot (4.1) selon l'une des revendications 1 à 9 et une seconde articulation robot (4.2) selon l'une des revendications 1 à 9, le moteur (M1-M4) avec son carter moteur (5) au moins partiellement bridé faisant saillie de l'élément de robot (4.1, 4.2) et la roue entraînée respective (8) a une cavité (20) de sorte que la partie en saillie du boîtier de moteur (5) de l'un des joints de robot (4.1) est reçue dans la cavité (20) de l'autre joint de robot (4.2).

11. Robot selon la revendication 10, **caractérisé en ce que** la au moins une articulation de robot (4.1, 4.2) est installée dans la chaîne cinématique du bras de robot (2) de telle sorte que l'axe de rotation (D1, D2) de l'articulation de robot (4.1, 4.2) dans toutes les configurations du bras du robot (2) est toujours aligné verticalement.

12. Robot selon la revendication 10 ou 11, **caractérisé en ce que** la au moins une articulation de robot (4.1, 4.2) ou une autre articulation de robot selon l'une des revendications 1 à 9 est installée dans la chaîne cinématique du bras de robot (2) de telle sorte que l'axe de rotation (D1, D2) de l'articulation du robot (4.1, 4.2) soit toujours aligné horizontalement dans toutes les configurations du bras du robot (2) et que le robot (1) possède un dispositif de compensation de gravité affecté à cette articulation du robot (4.1, 4.2).
